# EUROPEAN PATENT SPECIFICATION

(11) **EP 1 302 932 B1**
(45) Date of publication and mention of the grant of the patent: **13.10.2004**
(21) Application number: 02028937.7
(22) Date of filing: 26.05.2000
(51) Int. Cl.: G11B 5/66

(54) **Magnetic recording medium**
Magnetisches Aufzeichnungsmittel
Moyen d' enregistrement magnétique

(30) Priority: 08.06.1999 JP 16132999; 07.04.2000 JP 2000107075; 07.04.2000 JP 2000107071; 07.04.2000 JP 2000107076; 07.04.2000 JP 2000107074; 07.04.2000 JP 2000107072
(43) Date of publication of application: 16.04.2003
(62) Divisional of application: 00304517.6
(73) Proprietor: FUJITSU LIMITED, Kawasaki-shi, Kanagawa 211-8588 (JP)
(72) Inventor: Abarra, E. Noel, c/oFujitsu Limited, Kawasaki-shi, Kanagawa, 211-8588 (JP); Okamoto, Iwao, c/oFujitsu Limited, Kawasaki-shi, Kanagawa, 211-8588 (JP); Mizoshita, Yoshifumi, c/oFujitsu Limited, Kawasaki-shi, Kanagawa, 211-8588 (JP); Yoshida, Yuki, c/oFujitsu Limited, Kawasaki-shi, Kanagawa, 211-8588 (JP); Umeda, Hisashi, c/oFujitsu Limited, Kawasaki-shi, Kanagawa, 211-8588 (JP); Suzuki, Masaya, c/oFujitsu Limited, Kawasaki-shi, Kanagawa, 211-8588 (JP); Akimoto, Hideyuki, c/oFujitsu Limited, Kawasaki-shi, Kanagawa, 211-8588 (JP); Sato, Hisateru, c/oFujitsu Limited, Kawasaki-shi, Kanagawa, 211-8588 (JP); Kaitsu, Isatake, c/oFujitsu Limited, Kawasaki-shi, Kanagawa, 211-8588 (JP)
(74) Representative: Fenlon, Christine Lesley

(56) References cited:
- US-A- 5 851 643

## Description

The present invention generally relates to magnetic recording media, and more particularly to a magnetic recording medium suited for high-density recording.

The recording density of longitudinal magnetic recording media, such as magnetic disks, has been increased considerably, due to the reduction of medium noise and the development of magnetoresistive and high-sensitivity spin-valve heads. A typical magnetic recording medium is comprised of a substrate, an underlayer, a magnetic layer, and a protection layer which are successively stacked in this order. The underlayer is made of Cr or a Cr-based alloy, and the magnetic layer is made of a Co-based alloy.

Various methods have been proposed to reduce the medium noise. For example, Okamoto et al., "Rigid Disk Medium For 5 Gbit/in² Recording", AB-3, Intermag '96 Digest proposes decreasing the grain size and size distribution of the magnetic layer by reducing the magnetic layer thickness by the proper use of an underlayer made of CrMo, and U.S. Patent No.5,693,426 proposes the use of an underlayer made of NiAl. Further, Hosoe et al., "Experimental Study of Thermal Decay in High-Density Magnetic Recording Media", IEEE Trans. Magn. Vol.33, 1528 (1997), for example, proposes the use of an underlayer made of CrTiB. The underlayers described above also promote c-axis orientation of the magnetic layer in a plane which increases the remanent magnetization and the thermal stability of written bits. In addition, proposals have been made to reduce the thickness of the magnetic layer, to increase the resolution or to decrease the transition width between written bits. Furthermore, proposals have been made to decrease the exchange coupling between grains by promoting more Cr segregation in the magnetic layer which is made of CoCr-based alloy.

However, as the grains of the magnetic layer become smaller and more magnetically isolated from each other, the written bits become unstable due to thermal activation and to demagnetizing fields which increase with linear density. Lu et al., "Thermal Instability at 10 Gbit/in² Magnetic Recording", IEEE Trans. Magn. Vol.30, 4230 (1994), demonstrated, by micromagnetic simulation, that exchange-decoupled grains having a diameter of 10 nm and ratio KᵤV/k_{B}T∼60 in 400 kfci di-bits are susceptible to significant thermal decay, where Kᵤ denotes the magnetic anisotropy constant, V denotes the average magnetic grain volume, k_{B} denotes the Boltzmann constant, and T denotes the temperature. The ratio KᵤV/k_{B}T is also referred to as a thermal stability factor.

It has been reported in Abarra et al., "Thermal Stability of Narrow Track Bits in a 5 Gbit/in² Medium", IEEE Trans. Magn. Vol.33, 2995 (1997), that the presence of intergranular exchange interaction stabilizes written bits, by MFM studies of annealed 200 kfci bits on a 5 Gbit/in² CoCrPtTa/CrMo medium. However, more grain decoupling is essential for recording densities of 20 Gbit/in² or greater.

The obvious solution has been to increase the magnetic anisotropy of the magnetic layer. But unfortunately, the increased magnetic anisotropy places a great demand on the head write field which degrades the "overwrite" performance which is the ability to write over previously written data.

In addition, the coercivity of thermally unstable magnetic recording media increases rapidly with decreasing switching time, as reported in He et al., "High Speed Switching in Magnetic Recording Media", J. Magn. Magn. Mater. Vol.155, 6 (1996), for magnetic tape media, and in J. H. Richter, "Dynamic Coervicity Effects in Thin Film Media", IEEE Trans. Magn. Vol.34, 1540 (1997), for magnetic disk media. Consequently, the adverse effects are introduced in the data rate, that is how fast data can be written on the magnetic layer and the amount of head field required to reverse the magnetic grains.

On the other hand, another proposed method of improving the thermal stability increases the orientation ratio of the magnetic layer, by appropriately texturing the substrate under the magnetic layer. For example, Akimoto et al., "Relationship Between Magnetic Circumferential Orientation and Magnetic Thermal Stability", J. Magn. Magn. Mater. vol.193, pp.240-242(1999), in press, report,through micromagnetic simulation, that the effective ratio KᵤV/k_{B}T is enhanced by a slight increase in the orientation ratio. This further results in a weaker time dependence for the coercivity which improves the overwrite performance of the magnetic recording medium, as reported in Abarra et al., "The Effect of Orientation Ratio on the Dynamic Coercivity of Media for >15 Gbit/in² Recording", IEEE Trans. Magn. vol.35, pp.2709-2711, 1999.

Furthermore, keepered magnetic recording media have been proposed for thermal stability improvement. The keeper layer is made up of a magnetically soft layer parallel to the magnetic layer. This soft layer can be disposed above or below the magnetic layer. Oftentimes, a Cr isolation layer is interposed between the soft layer and the magnetic layer. The soft layer reduces the demagnetizing fields in written bits on the magnetic layer. However, coupling the magnetic layer to a continuously-exchanged coupled soft layer defeats the purpose of decoupling the grains of the magnetic layer. As a result, the medium noise increases.

Various methods have been proposed to improve the thermal stability and to reduce the medium noise. However, the proposed methods do not provide a considerable improvement of the thermal stability of written bits, thereby making it difficult to greatly reduce the medium noise. In addition, some of the proposed methods introduce adverse effects on the performance of the magnetic recording medium due to the measures taken to reduce the medium noise.

More particularly, in order to obtain a thermally stable performance of the magnetic recording medium, it is conceivable to (i) increase the magnetic anisotropy constant Kᵤ, (ii) decrease the temperature T or, (iii) increase the grain volume V of the magnetic layer. However, measure (i) increases the coercivity, thereby making it more difficult to write information on the magnetic layer. In addition, measure (ii) is impractical since in magnetic disk drives, for example, the operating temperature may become greater than 60° C. Furthermore, measure (iii) increases the medium noise as described above. As an alternative for measure (iii), it is conceivable to increase the thickness of the magnetic layer, but this would lead to deterioration of the resolution.

Accordingly, it is desirable to provide a magnetic recording medium in which the thermal stability of written bits can be improved without increasing the medium noise, so as to enable reliable high-density recording without introducing adverse effects on the performance of the magnetic recording medium, that is unnecessarily increasing the magnetic anisotropy.

According to the present invention there is provided a magnetic recording medium comprising at least one exchange layer structure and a magnetic layer provided on the exchange layer structure, the exchange layer structure including a ferromagnetic layer and a non-magnetic coupling layer provided on the ferromagnetic layer, and a magnetic bonding layer provided between the ferromagnetic layer and the non-magnetic coupling layer and/or between the non-magnetic coupling layer and the magnetic layer, the magnetic bonding layer having a magnetization direction parallel to the ferromagnetic layer and the magnetic layer, said ferromagnetic layer and said magnetic layer being exchange-coupled and having anti-parallel magnetizations. Thus, it is possible to provide a magnetic recording medium which can improve the thermal stability of written bits, so as to enable reliable high-density recording without degrading the overwrite performance.

US-A-5851643 discloses a magnetic recording medium with a magnetic film made from at least two layers stacked via a non-magnetic intermediate layer. The magnetic film is formed on a structure control underlayer situated on a non-magnetic substrate. However, unlike the present invention, the two magnetic layers do not have anti-parallel magnetizations.

With reference to earlier British Patent Application No. 0015023.5, the applicant has voluntarily limited the scope of the present application in respect of the United Kingdom by submitting separate claims.

Reference will now be made, by way of example, to the accompanying drawings, in which:
FIG. 1 is a cross sectional view showing a first example of a magnetic recording medium not embodying the present invention;
FIG. 2 is a cross sectional view showing an important part of a second example of a magnetic recording medium not embodying the present invention;
FIG. 3 is a diagram showing an in-plane magnetization curve of a single CoPt layer having a thickness of 10 nm on a Si substrate;
FIG. 4 is a diagram showing an in-plane magnetization curve of two CoPt layers separated by a Ru layer having a thickness of 0.8 nm;
FIG. 5 is a diagram showing an in-plane magnetization curve of two CoPt layers separated by a Ru layer having a thickness of 1.4 nm;
FIG. 6 is a diagram showing an in-plane magnetization curve of two CoCrPt layers separated by a Ru having a thickness of 0.8 nm;
FIG. 7 is a cross sectional view showing an important part of a magnetic storage apparatus;
FIG. 8 is a plan view showing the important part of the magnetic storage apparatus;
FIG. 9 is a diagram showing an in-plane magnetization curve for a magnetic recording medium having a single CoCrPtB layer grown on a NiAl layer on glass;
FIG. 10 is a diagram showing an in-plane magnetization curve for a magnetic recording medium having two ferromagnetic layers of CoCrPtB separated by a Ru layer having a thickness of 0.8 nm on a NiP coated Al-Mg substrate;
FIG. 11 is a diagram showing an in-plane magnetization curve for a magnetic recording medium having two ferromagnetic layers of CoCrPtB separated by a Ru layer on a NiP coated Al substrate;
FIG. 12 is a diagram showing an in-plane magnetization curve for a magnetic recording medium having three ferromagnetic layers of CoCrPtB separated by a Ru layer between each two adjacent CoCrPtB layers on a NiP coated Al substrate;
FIG. 13 is a diagram showing an in-plane magnetization curve for a magnetic recording medium having two negatively coupled ferromagnetic layers of CoCrPtB separated by a Ru layer, on a NiAl coated glass substrate;
FIG. 14 is a diagram showing an in-plane magnetization curve shown in FIG. 13 in comparison with a magnetic recording medium having a single ferromagnetic layer of CoCrPtB on a NiAl coated glass substrate;
FIG. 15 is a diagram showing signal decays of the magnetic recording media having two and three ferromagnetic layers, in comparison with a signal decay of the magnetic recording medium having the single ferromagnetic layer;
FIG. 16 is a diagram showing M-H curves of the magnetic recording medium having the two negatively coupled ferromagnetic layers at different temperatures;
FIG. 17 is a diagram showing the temperature dependence of the coercivity for the magnetic recording medium having the characteristics shown in FIG. 16;
FIG. 18 is a diagram showing the PW50 dependence on the effective and total ferromagnetic layer thickness of the magnetic recording media having one, two and three ferromagnetic layers;
FIG. 19 is a diagram showing the effective thickness dependence of the change in isolated wave medium SNR;
FIG. 20 is a diagram showing the general construction of a magnetic recording medium producing apparatus;
FIG. 21 is a diagram showing the dependence of isolated wave output on magnetic layer thickness;
FIG. 22 is a diagram showing the temperature dependence of high-frequency SNR;
FIG. 23 is a diagram showing a relation ship of the isolated wave medium SNR Siso/Nm and the sputtering rate of Ru;
FIG. 24 is a cross sectional view showing an important part of an embodiment of the magnetic recording medium according to the present invention; and
FIG. 25 is a diagram for explaining in-plane characteristics of two CoCr-based alloy layers separated by Ru.

S. S. P. Parkin, "Systematic Variation of the Strength and Oscillation Period of Indirect Magnetic Exchange Coupling through the 3d, 4d, and 5d Transition Metals", Phys. Rev. Lett. Vol.67, 3598 (1991) describes several magnetic transition metals such as Co, Fe and Ni that are coupled through thin non-magnetic interlayers such as Ru and Rh. On the other hand, U.S. Patent No.5,701,223 proposes a spin-valve which employs the above described layers as laminated pinning layers to stabilize the sensor.

For a particular Ru or Ir layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The present invention increases the thermal stability of written bits by exchange coupling the magnetic layer to another ferromagnetic layer with an opposite magnetization or by a laminated ferrimagnetic structure. The ferromagnetic layer or the laminated ferrimagnetic structure is made up of exchange-decoupled grains as the magnetic layer. In other words, the present invention uses an exchange pinning ferromagnetic layer or a ferrimagnetic multilayer to improve the thermal stability performance of the magnetic recording medium.

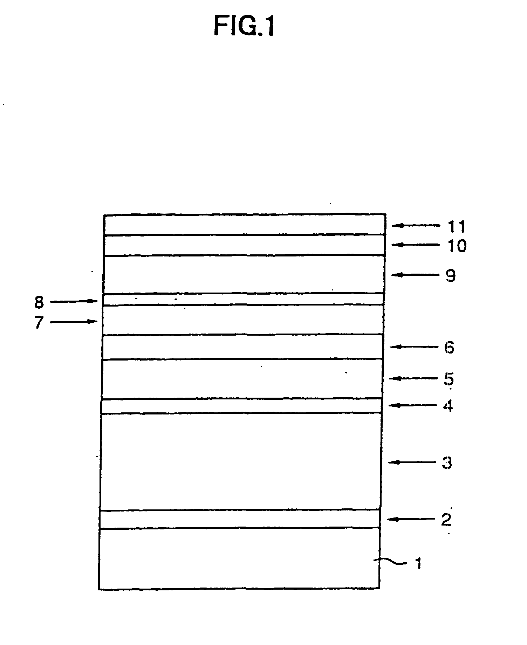

FIG. 1 is a cross-sectional view showing an important part of a magnetic recording medium which does not embody the present invention, but which is useful in understanding it.

The magnetic recording medium includes a non-magnetic substrate 1, a first seed layer 2, a NiP layer 3, a second seed layer 4, an underlayer 5, a non-magnetic intermediate layer 6, a ferromagnetic layer 7, a non-magnetic coupling layer 8, a magnetic layer 9, a protection layer 10, and a lubricant layer 11 which are stacked in the order shown in FIG. 1.

For example, the non-magnetic substrate 1 is made of Al, Al alloy or glass. This non-magnetic substrate 1 may or may not be mechanically textured. The first seed layer 2 is made of Cr or Ti, for example, especially in the case where the non-magnetic substrate 1 is made of glass. The NiP layer 3 is preferably oxidized and may or may not be mechanically textured. The second seed layer 4 is provided to promote a (001) or a (112) texture of the underlayer 5 when using a B2 structure alloy such as NiAl and FeAl for the underlayer 5. The second seed layer 4 is made of an appropriate material similar to that of the first seed layer 2.

In a case where the magnetic recording medium is a magnetic disk, the mechanical texturing provided on the non-magnetic substrate 1 or the NiP layer 3 is made in a circumferential direction of the disk, that is, in a direction in which tracks of the disk extend.

The non-magnetic intermediate layer 6 is provided to further promote epitaxy; narrow the grain distribution of the magnetic layer 9, and orient the anisotropy axes of the magnetic layer 9 along a plane parallel to the recording surface of the magnetic recording medium. This non-magnetic intermediate layer 6 is made of a hcp structure alloy such as CoCr-M, where M = B, Mo, Nb, Ta, W, Cu or alloys thereof, and has a thickness in a range of 1 to 5 nm.

The ferromagnetic layer 7 is made of Co, Ni, Fe, Co-based alloy, Ni-based alloy, Fe-based alloy or the like. In other words, alloys such as CoCrTa, CoCrPt and CoCrPt-M, where M = B, Mo, Nb, Ta, W, Cu or alloys thereof may be used for the ferromagnetic layer 7. This ferromagnetic layer 7 has a thickness in a range of 2 to 10 nm. The non-coupling magnetic layer 8 is made of Ru, Ir, Rh, Cr, Cu, Ru-based alloy, Ir-based alloy, Rh-based alloy, Cu-based alloy, Cr-based alloy or the like. This non-magnetic coupling layer 8 preferably has a thickness in a range of 0.4 to 1.0 nm for antiparallel coupling using Ru, and preferably of the order of approximately 0.6 to 0.8 nm for an antiparallel coupling using Ru. For this particular thickness range of the non-magnetic coupling layer 8, the magnetizations of the ferromagnetic layer 7 and the magnetic layer 9 are antiparallel. The ferromagnetic layer 7 and the non-magnetic coupling layer 8 form an exchange layer structure.

For a ferromagnetic layer 7 made of a Fe-based alloy, Cr forms a better non-magnetic coupling layer 8. In this case, the Cr non-magnetic coupling layer 8 has an optimum thickness of approximately 1.8 nm.

The magnetic layer 9 is made of Co or a Co-based alloy such as CoCrTa, CoCrPt and CoCrPt-M, where M = B, Mo, Nb, Ta, W, Cu or alloys thereof. The magnetic layer 9 has a thickness in a range of 5 to 30 nm. Of course, the magnetic layer 9 is not limited to a single-layer structure, and a multilayer structure may be used for the magnetic layer 9.

The protection layer 10 is made of C, for example. In addition, the lubricant layer 11 is made of an organic lubricant, for example, for use with a magnetic transducer such as a spin-valve head. The protection layer 10 and the lubricant layer 11 form a protection layer structure on the recording surface of the magnetic recording medium.

Obviously, the layer structure under the exchange layer structure is not limited to that shown in FIG. 1. For example, the underlayer 5 may be made of Cr or Cr-based alloy and formed to a thickness in a range of 5 to 40 nm on the substrate 1, and the exchange layer structure may be provided on this underlayer 5.

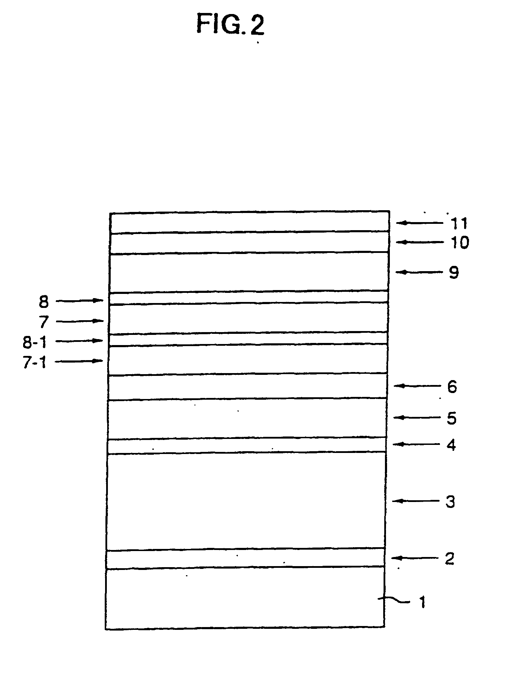

Next, a description will be given in Fig. 2 of another magnetic recording medium not embodying the present invention which is nevertheless useful for understanding it.

In FIG. 2, those parts which are the same as those corresponding parts in FIG. 1 are designated by the same reference numerals, and a description thereof will be omitted.

In this magnetic recording medium, the exchange layer structure includes two non-magnetic coupling layers 8 and 8-1, and two ferromagnetic layers 7 and 7-1, which form a ferrimagnetic multilayer. This arrangement increases the effective magnetization and signal, since the magnetizations of the two non-magnetic coupling layers 8 and 8-1 cancel each other instead of a portion of the magnetic layer 9. As a result, the grain volume and thermal stability of magnetization of the. magnetic layer 9 are effectively increased. More bilayer structures made up of the pair of ferromagnetic layer and non-magnetic coupling layer may be provided additionally to increase the effective grain volume, as long as the easy axis of magnetization is appropriately oriented for the subsequently provided layers.

The ferromagnetic layer 7-1 is made of a material similar to that of ferromagnetic layer 7, and has a thickness range selected similarly to the ferromagnetic layer 7. In addition, the non-magnetic coupling layer 8-1 is made of a material similar to that of the non-magnetic coupling layer 8, and has a thickness range selected similarly to the non-magnetic coupling layer 8. Within the ferromagnetic layers 7-1 and 7, the c-axes are preferably in-plane and the grain growth columnar.

In this example , the magnetic anisotropy of the ferromagnetic layer 7-1 is preferably higher than that of the ferromagnetic layer 7. However, the magnetic anisotropy of the ferromagnetic layer 7-1 may be the same as or be higher than that of, the magnetic layer 9.

Furthermore, a remanent magnetization and thickness product of the ferromagnetic layer 7 may be smaller than that of the ferromagnetic layer 7-1.

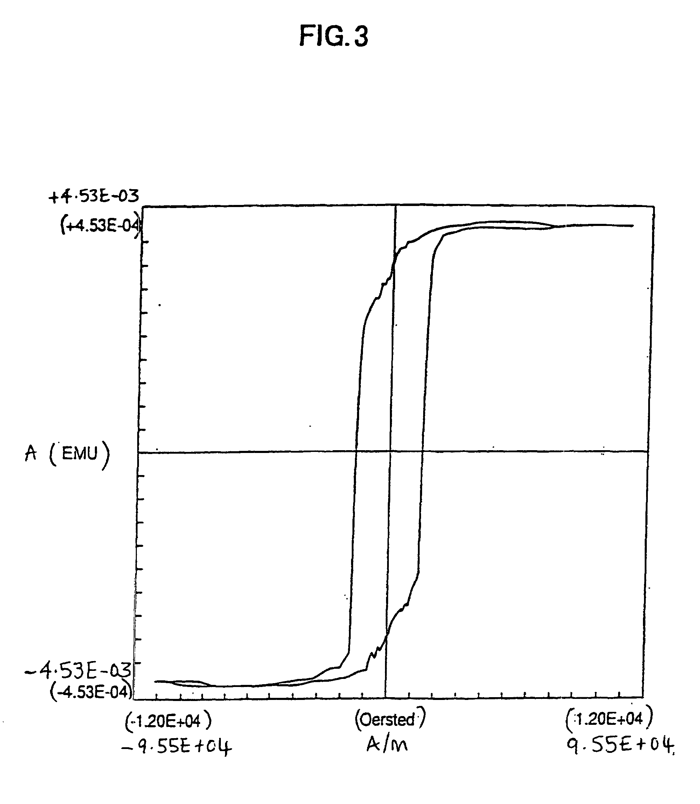

FIG. 3 is a diagram showing an in-plane magnetization curve of a single CoPt layer having a thickness of 10 nm on a Si substrate. In FIG. 3, the ordinate indicates the magnetization ( A ), and the abscissa indicates the magnetic field (A/m). Conventional magnetic recording media show a behavior similar to that shown in FIG. 3.

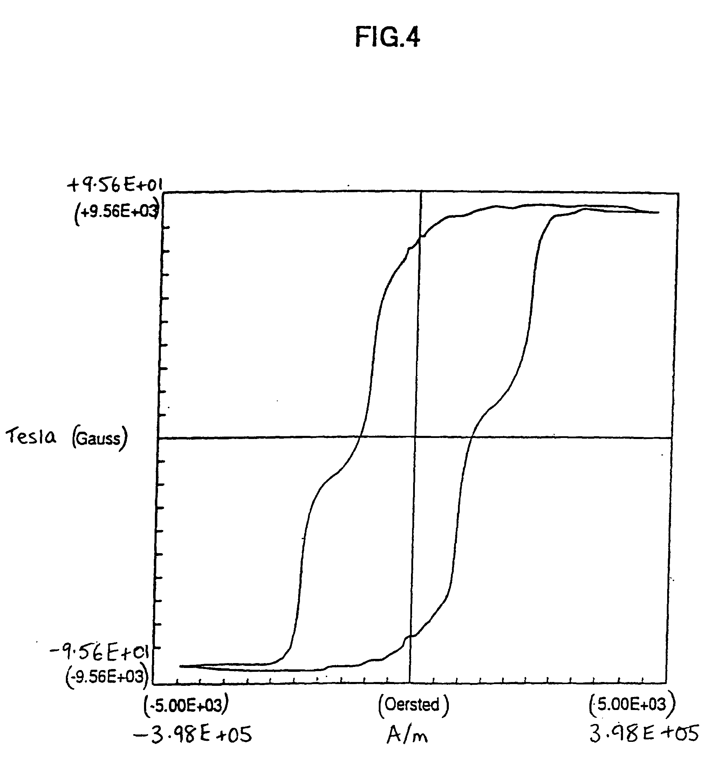

FIG. 4 is a diagram showing an in-plane magnetization curve of two CoPt layers separated by a Ru layer having a thickness of 0.8 nm, as in the case of the magnetic recording medium of FIG. 1. In FIG. 4, the ordinate indicates the magnetization (Tesla), and the abscissa indicates the magnetic field(A/m). As may be seen from FIG. 4, the loop shows shifts near the magnetic field which indicate the antiparallel coupling.

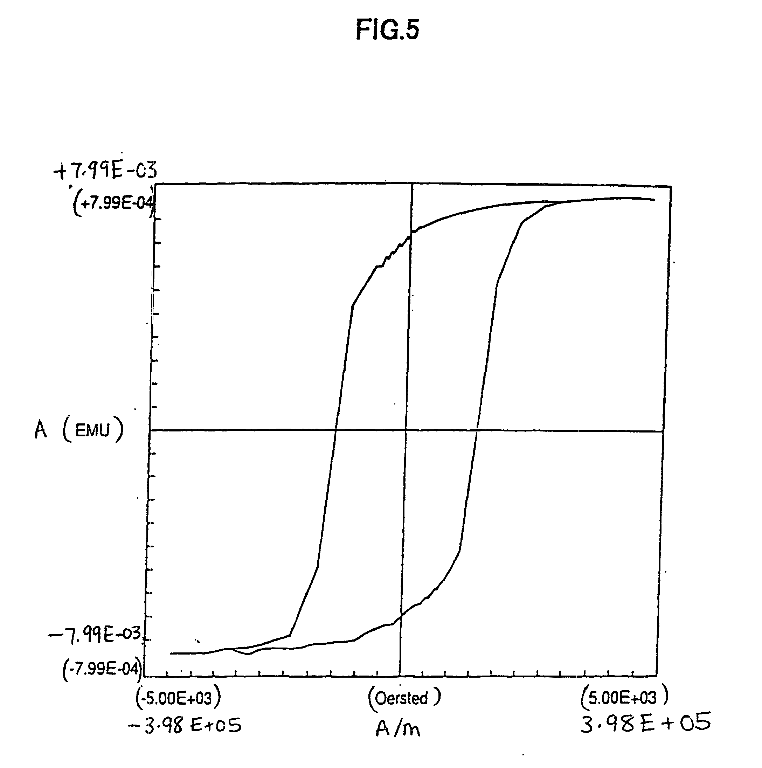

FIG. 5 is a diagram showing an in-plane magnetization curve of two CoPt layers separated by a Ru layer having a thickness of 1.4 nm. In FIG. 5, the ordinate indicates the magnetization (A), and the abscissa indicates the magnetic field (A/m). As may be seen from FIG. 5, the magnetizations of the two CoPt layers are parallel.

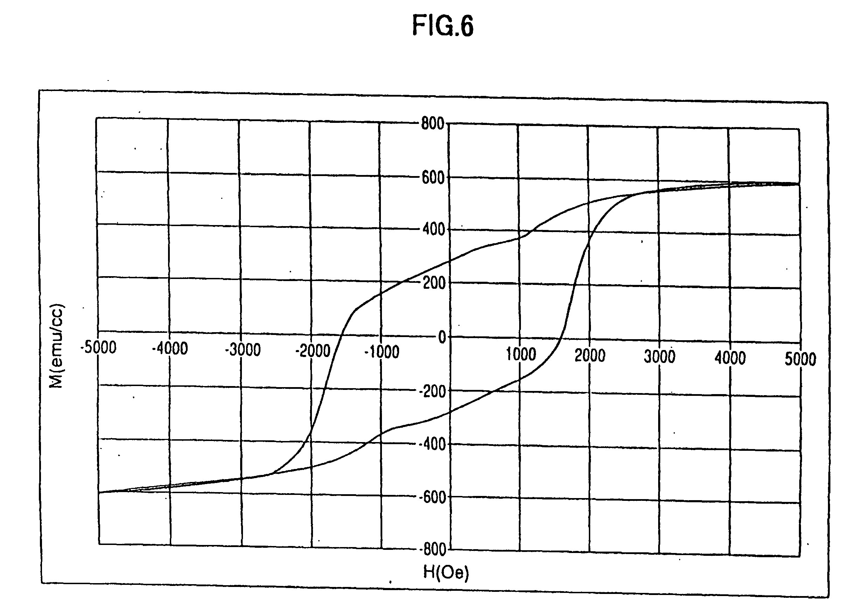

FIG. 6 is a diagram showing an in-plane magnetization curve for two CoCrPt layers separated by a Ru having a thickness of 0.8 nm, as in the case of the second embodiment of the magnetic recording medium. In FIG. 6, the ordinate indicates the magnetization (emu/cc), and the abscissa indicates the field (Oe). As may be seen from FIG. 6, the loop shows shifts near the field which indicate the antiparallel coupling. In FIG. 6 and following Figures lemu/cc = 1.0E+07 Am⁻³ and 10e = 79.58 A/m.

From FIGS. 3 and 4, it may be seen that the antiparallel coupling can be obtained by the provision of the exchange layer structure. In addition, it may be seen by comparing FIG. 5 with FIGS. 4 and 6 that the non-magnetic coupling layer 8 is desirably in the range of 0.4 to 1.0 nm in order to achieve the antiparallel coupling.

Therefore, as described above, it is possible to effectively increase the apparent grain volume of the magnetic layer by the exchange coupling provided between the magnetic layer and the ferromagnetic layer via the non-magnetic coupling layer, without sacrificing the resolution. In other words, the apparent thickness of the magnetic layer is increased with regard to the grain volume of the magnetic layer so that a thermally stable medium can be obtained, and in addition, the effective thickness of the magnetic layer is maintained since cancellation of signals especially from the bottom layers is achieved. This allows higher linear density recording that is otherwise not possible for thick media. As a result, it is possible to obtain a magnetic recording medium with reduced medium noise and thermally stable performance.

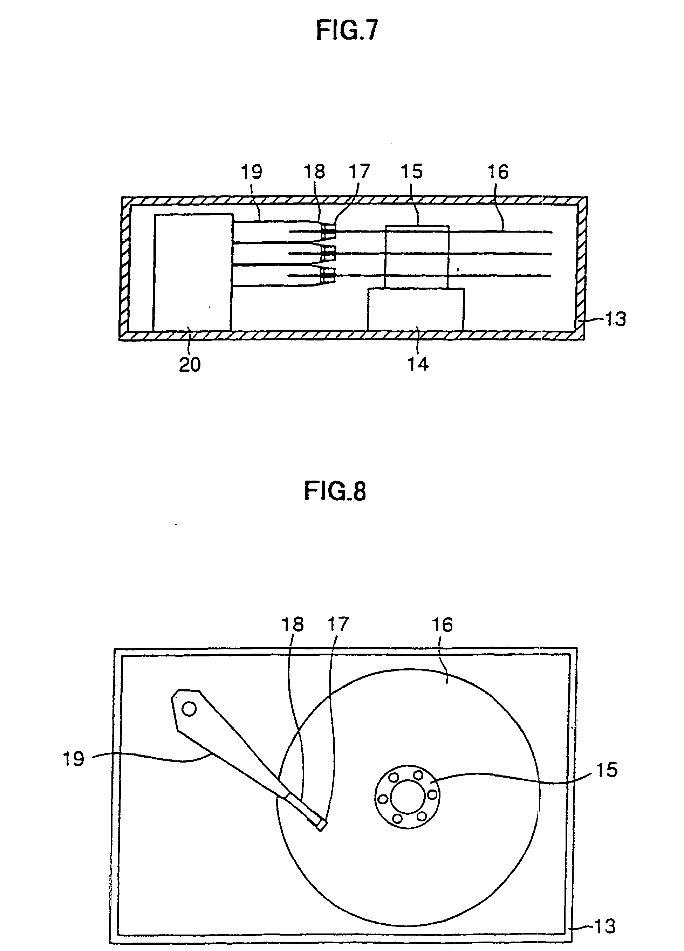

Next, a description will be given of a magnetic storage apparatus, by referring to FIGS. 7 and 8. FIG. 7 is a cross sectional view showing an important part of the magnetic storage apparatus, and FIG. 8 is a plan view showing the important part of the magnetic storage apparatus.

As shown in FIGS. 7 and 8, the magnetic storage apparatus generally includes a housing 13. A motor 14, a hub 15, a plurality of magnetic recording media 16, a plurality of recording and reproducing heads 17, a plurality of suspensions 18, a plurality of arms 19, and an actuator unit 20 are provided within the housing 13. The magnetic recording media 16 are mounted on the hub 15 which is rotated by the motor 14. The recording and reproducing head 17 is made up of a reproducing head such as a MR or GMR head, and a recording head such as an inductive head. Each recording and reproducing head 17 is mounted on the tip end of a corresponding arm 19 via the suspension 18. The arms 19 are moved by the actuator unit 20. The basic construction of this magnetic storage apparatus is known, and a detailed description thereof will be omitted in this specification.

This magnetic storage apparatus is characterized by the magnetic recording media 16. Each magnetic recording medium 16 has the structure of the magnetic recording medium described above in conjunction with FIGS. 1 and 2. Of course, the number of magnetic recording media 16 is not limited to three, and only one, two or four or more magnetic recording media 16 may be provided. Further, each magnetic recording medium 16 may have the structure of any of the embodiments of the magnetic recording medium which will be described later.

The basic construction of the magnetic storage unit is not limited to that shown in FIGS. 7 and 8. In addition, the magnetic recording medium used in the present invention is not limited to a magnetic disk.

In the following description, the ferromagnetic layer of the exchange layer structure and the magnetic layer will also be referred to as ferromagnetic layers forming a magnetic layer structure.

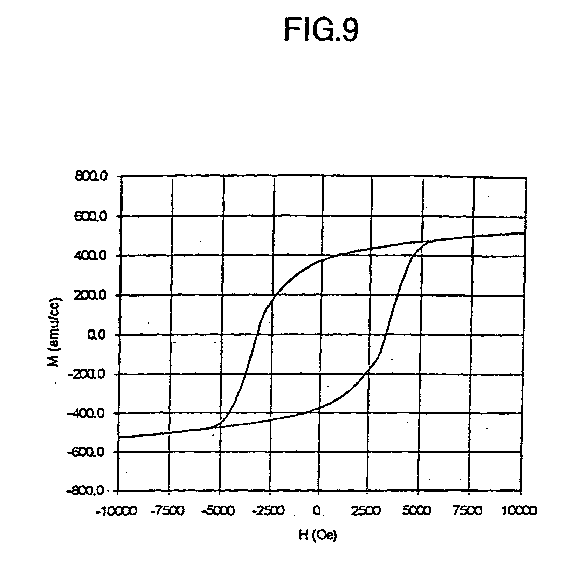

FIG. 9 is a diagram showing an in-plane magnetization curve for a magnetic recording medium having a single layer of CoCrPtB grown on a NiAl layer on glass. In FIG. 9, the ordinate indicates the magnetization M (emu/cc), and the abscissa indicates the magnetic field H (Oe). Similar M-H curves are observed for a single Co-based layer grown on a Cr underlayer on NiP coated Al substrate or NiP coated glass substrate.

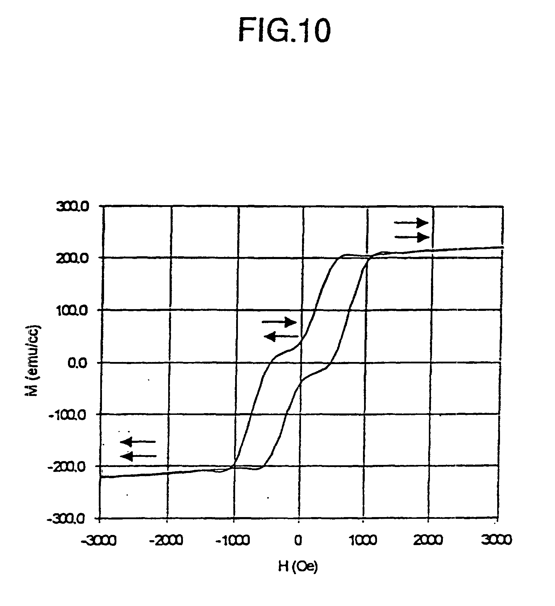

On the other hand, FIG. 10 is a diagram showing an in-plane magnetization curve for a magnetic recording medium having two ferromagnetic layers of CoCrPtB separated by a Ru layer having a thickness of 0.8 nm, sputtered on a NiP coated Al-Mg substrate. In FIG. 10, the ordinate indicates the magnetization M (emu/cc), and the abscissa indicates the magnetic field H (Oe). As may be seen from FIG. 10, the magnetization M abruptly decreases when the magnetic field H is around H=500 Oe which indicates an exchange coupling field of approximately 1000 Oe. The reduced magnetization M at H=0 evidences the anti-parallel coupling.

The optimum Ru thickness for the negative coupling can be determined not only by magnetometry but also by spin stand methods. The reproduced signal at low densities gives an indication of a remanent magnetization and thickness product Mrδ, where Mr denotes the remanent magnetization and δ denotes the effective thickness of the CoCrPtB layer, that is the ferromagnetic layer of the magnetic layer structure. If the Ru thickness is varied while the thicknesses of the two CoCrPtB layers are maintained constant, the reproduced signal shows a dip at the optimum Ru thickness. The optimum Ru thickness may depend on the magnetic materials and the processing used to form the ferromagnetic layers of the magnetic layer structure. For CoCrPt-based alloys manufactured above 150°C, the antiparallel coupling is induced for the Ru thickness in a range of approximately 0.4 to 1.0 nm.

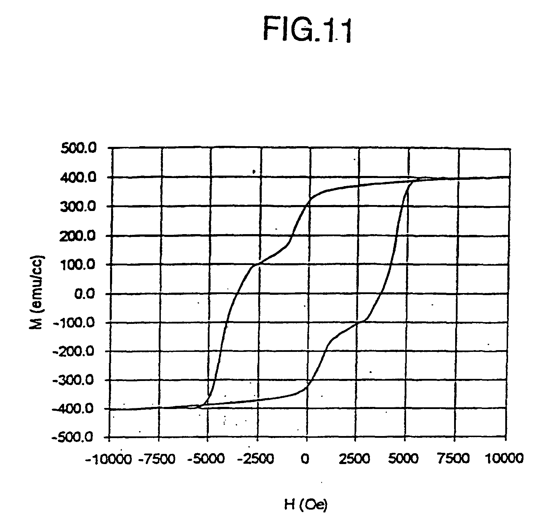

FIG. 11 is a diagram showing an in-plane magnetization curve for a magnetic recording medium having two ferromagnetic layers of CoCrPtB separated by a Ru layer, on a NiP coated Al substrate. In FIG. 11, the ordinate indicates the magnetization M (emu/cc), and the abscissa indicates the magnetic field H (Oe). FIG. 11 shows a case where a first CoCrPtB layer closer to the substrate is 8 nm thick, the Ru layer is 0.8 nm thick, and a second CoCrPtB layer further away from the substrate is 20 nm thick.

In this case, antiparallel coupling is observed but at higher negative magnetic fields. Unless the demagnetizing fields inside bits are very high, the antiparallel coupling is not completely achieved and very high reproduced signals are observed as the magnetizations in both the first and second CoCrPtB layers point in essentially the same direction. It is therefore necessary to reduce the coercivity Hc of the first CoCrPtB layer by reducing the thickness thereof or, by use of compositions which result in a lower coercivity Hc. For CoCrPt-based materials, the latter is usually achieved by increasing the Cr content and/or reducing the Pt content.

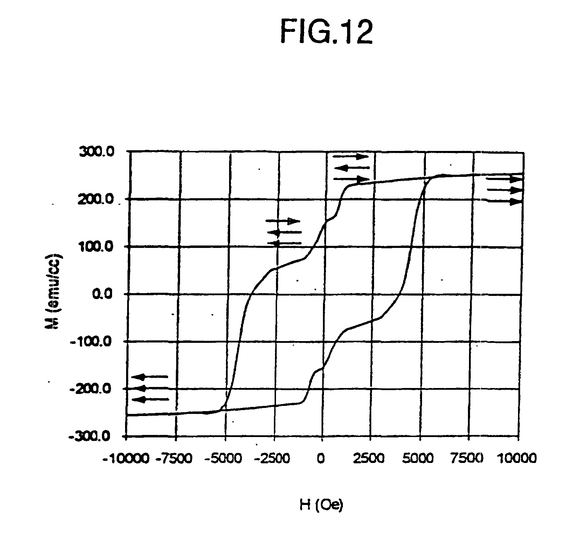

FIG. 12 is a diagram showing an in-plane magnetization curve for a magnetic recording medium having three ferromagnetic layers of CoCrPtB separated by a Ru layer between each two adjacent CoCrPtB layers, on a NiP coated Al substrate. In FIG. 12, the ordinate indicates the magnetization M (emu/cc), and the abscissa indicates the magnetic field H (Oe). FIG. 12 shows a case where first and second CoCrPtB layers closer to the substrate are 6 nm thick, a top third CoCrPtB layer is 20 nm thick, and the Ru layers between the first and second CoCrPtB layers and between the second and third CoCrPtB layers respectively are 0.8 nm thick. In this case, the magnetization M drops when the magnetic field H is H=500 Oe, which indicates that one of the first through third CoCrPtB layers reversed magnetization at positive fields. It is likely the middle second CoCrPtB layer which reversed magnetization since this middle second CoCrPtB layer is subject to a stronger reversing field due to the two interfaces. The interlayer interaction is therefore 500 Oe greater than the coercivity Hc of the middle second CoCrPtB layer.

However, at low negative magnetic fields, the bottom first CoCrPtB layer starts reversing magnetization, such that at approximately -1000 Oe, the magnetization of only the top third CoCrPtB layer is not reversed. Preferably, the bottom first CoCrPtB layer should not reverse magnetization at magnetic fields which are low compared to the demagnetizing fields inside bits, and this may be achieved for example by choosing the proper thickness and/or composition for the bottom first CoCrPtB layer. A magnetic recording medium which has these three ferromagnetic layers tends to have read-write performance which is better than a magnetic recording medium which only has a single ferromagnetic (magnetic) layer with no exchange coupling. There is a possibility that the reproduced signal will be reduced with time as more grains change layer magnetization configuration from parallel to antiparallel which is more stable. However, a solitary wave media signal-to-noise ratio (SNR) Siso/Nm of the magnetic recording medium is expected to be maintained since the medium noise level is also correspondingly reduced. Hence, the bit error rate (BER) which is intimately related to the isolated wave medium SNR Siso/Nm will not be degraded.

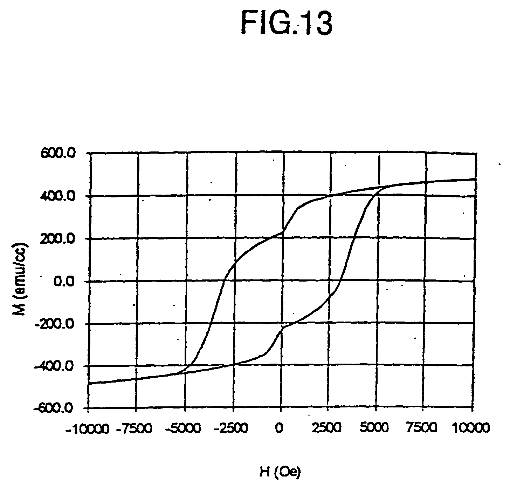

FIG. 13 is a diagram showing an in-plane magnetization curve for a magnetic recording medium having two negatively coupled ferromagnetic layers of CoCrPtB separated by a Ru layer, on a NiAl coated glass substrate. In FIG. 13, the ordinate indicates the magnetization M (emu/cc), and the abscissa indicates the magnetic field H (Oe). As shown in FIG. 13, the bottom CoCrPtB layer closer to the substrate reverses magnetization even before the magnetic field H becomes H=0 Oe.

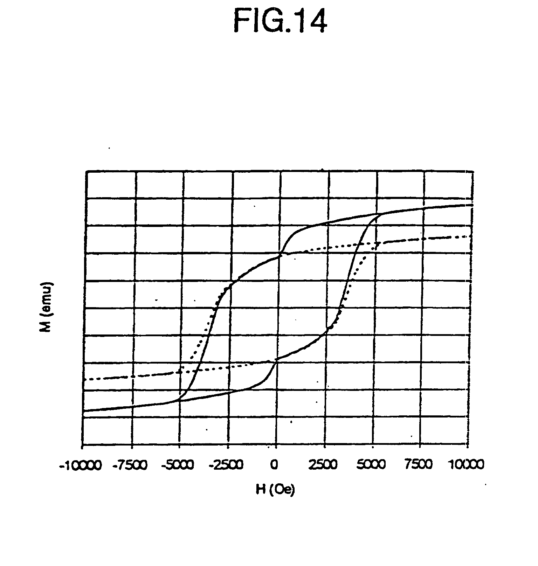

FIG. 14 is a diagram showing an in-plane magnetization curve shown in FIG. 13 in comparison with a magnetic recording medium having a single ferromagnetic layer of CoCrPtB on a NiAl coated glass substrate fabricated similarly to the recording-medium having the two negatively coupled ferromagnetic layers. In FIG. 14, the ordinate indicates the magnetization M (emu/cc), and the abscissa indicates the magnetic field H (Oe). In FIG. 14, the in-plane magnetization curve shown in FIG. 13 is indicated by a solid line, and an in-plane magnetization curve for the recording medium with the single ferromagnetic layer is indicated by a dashed line. In FIG. 14, the saturation magnetization is normalized so as to illustrate the similarity of the M-H curve portions relevant to the magnetic recording.

When a head saturates a portion of the magnetic recording medium having the two negatively coupled ferromagnetic layers, the magnetization of both the two ferromagnetic layers is in the head field direction, but as soon as the head field is no longer applied, the bottom ferromagnetic layer reverses magnetization and the situation inside a bit would be similar to that of the magnetic recording medium having the single ferromagnetic layer. A read head only senses the resultant magnetization. A person skilled in the art can therefore tune the thickness, composition and processing of the ferromagnetic layers, so that the magnetic recording medium behaves similarly to the conventional magnetic recording medium but with an enhanced thermal stability.

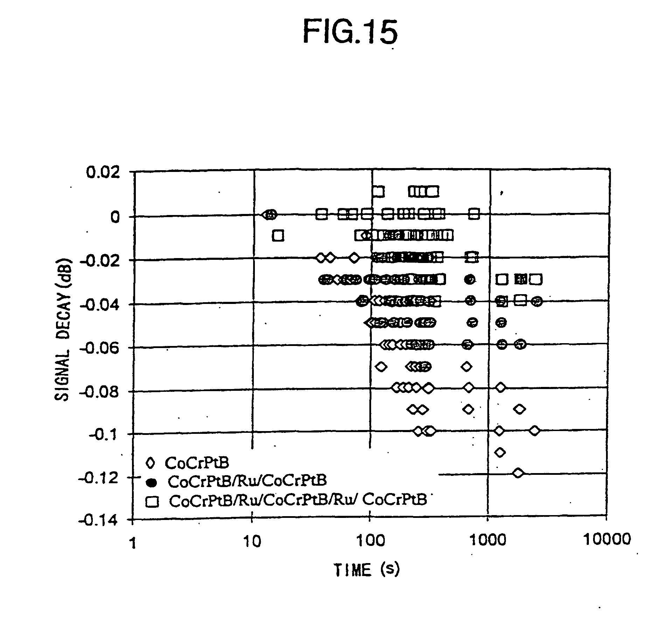

FIG. 15 is a diagram showing signal decays of magnetic recording media having two and three ferromagnetic layers, in comparison with a signal decay of a magnetic recording medium having the single ferromagnetic layer. In FIG. 15, the ordinate indicates the signal decay (dB) of the reproduced signal for 207 kfci bits, and the abscissa indicates the time (s). In FIG. 15, ◇ indicates the data of the magnetic recording medium having the single CoCrPtB layer which is 10 nm thick, • indicates the data of the magnetic recording medium having the bottom first CoCrPtB layer which is 10 nm thick, the Ru layer which is 0.8 nm thick and the top second CoCrPtB layer which is 4 nm thick, and □ indicates the data of the magnetic recording medium having the bottom first CoCrPtB layer which is 10 nm thick, the first Ru layer which is 0.8 nm thick, the middle CoCrPtB layer which is 4 nm thick, the second Ru layer which is 0.8 nm thick and the top third CoCrPtB layer which is 4 nm thick. The ferromagnetic layer compositions are all the same, and the coercivity Hc measured with a Kerr magnetometer are approximately 2700 Oe (214.8 kA/m) and are similar. As may be seen from FIG. 15, the magnetic recording media having two ferromagnetic layers and three ferromagnetic layers show more thermally stable characteristics as the effective volume is increased, as compared to the magnetic recording medium having the single ferromagnetic layer and no exchange coupling.

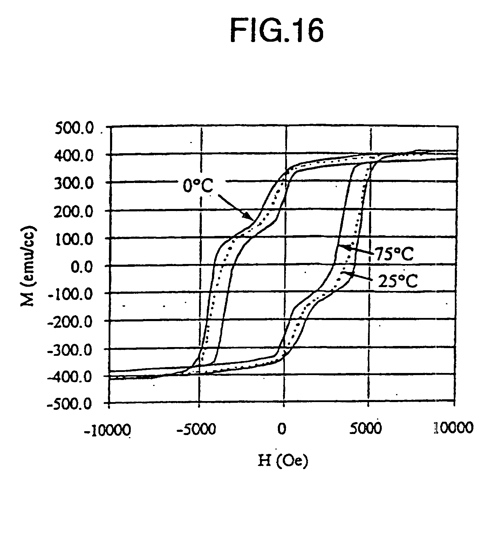

FIG. 16 is a diagram showing M-H curves of a magnetic recording medium having the two negatively coupled ferromagnetic layers at different temperatures. In FIG. 16, the ordinate indicates the magnetization M (emu/cc), the abscissa indicates the magnetic field H (Oe), and the data are shown for three different temperatures which are 0°C, 25°C and 75°C. A strong negative coupling is observed over a wide temperature range, and covers the range useful for magnetic recording media such as disks and tapes.

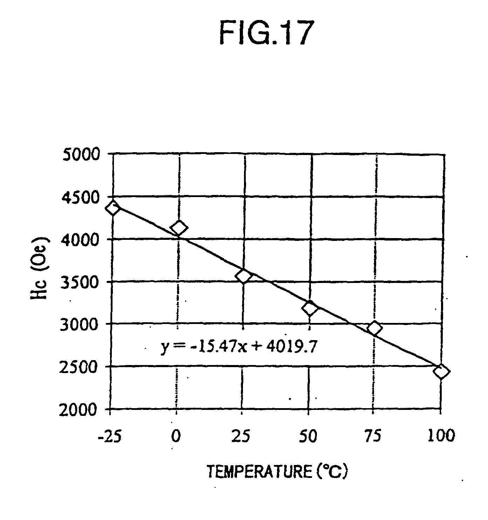

FIG. 17 is a diagram showing the temperature dependence of the coercivity for the magnetic recording medium having the characteristics shown in FIG. 16. In FIG. 17, the ordinate indicates the coercivity Hc (Oe), and the abscissa indicates the measured temperature (°C). In addition, y=Hc and x=temperature in the expression y=-15.47x+4019.7. The coercivity changes with temperature dHc/dT=15.5 Oe/°C and is less than that of the magnetic recording medium having the single ferromagnetic layer. A typical dHc/dT for the magnetic recording medium having the single ferromagnetic layer is 16 to 17 Oe/°C. Accordingly, it may be clearly seen that the improved dHc/dT value obtained for the magnetic recording medium having the two negatively coupled ferromagnetic layers primarily arises from the increased effective volume.

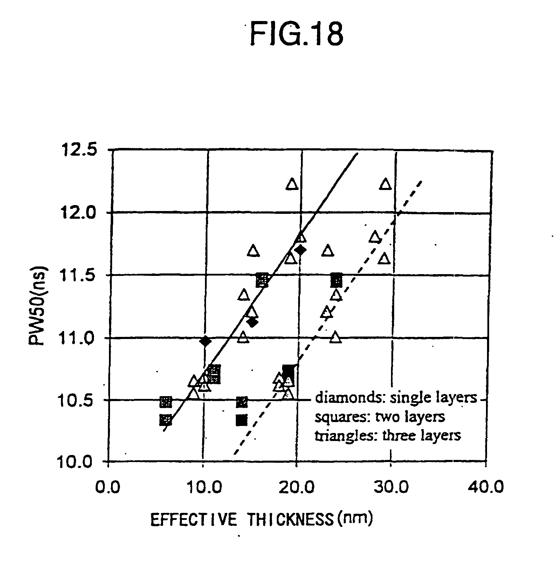

FIG. 18 is a diagram showing the PW50 dependence on the effective and total ferromagnetic layer thickness of the magnetic recording media having two and three ferromagnetic layers, in comparison with the PW50 dependence on the effective and total ferromagnetic layer thickness of the magnetic recording medium having the single ferromagnetic layer. In FIG. 18, the ordinate indicates the PW50 (ns), and the abscissa indicates the effective and total ferromagnetic layer thickness (nm). In FIG. 18, ◆ indicates the data of the magnetic recording medium having the single ferromagnetic layer. ■ indicates the data of the magnetic recording medium having two exchange-coupled ferromagnetic layers, and Δ indicates the data of the magnetic recording medium having three exchange-coupled ferromagnetic layers. The thickness and composition of the ferromagnetic layers are basically the same as those used to obtain the data shown in FIG. 15. For the data on the left side along the solid line, the thickness used is the effective thickness, that is magnetization cancellation due to an antiparallel configuration is assumed. Significant correlation is observed validating the assumption. When the total thickness of the ferromagnetic layer or layers is used, the data shifts to the right along the dotted line, which give unreasonably small PW50 values for the thicknesses involved when compared to those of the magnetic recording medium having the single ferromagnetic layer.

Therefore, although the writing resolution may be degraded due to the increased media thickness, the reading resolution is not, since cancellation of the signals from the lower layers occurs which may also explain the improved isolated wave medium SNR Siso/Nm over the magnetic recording medium having the single ferromagnetic layer. The isolated wave medium SNR Siso/Nm of the magnetic recording medium having the two exchange-coupled ferromagnetic layers and very low effective Mr δ is especially improved over that of the magnetic recording medium having the single ferromagnetic layer. Such a very low effective Mrδ can be achieved when the two ferromagnetic layers have almost the same Mrδ. For the magnetic recording medium having the three exchange-coupled ferromagnetic layers, the performance is enhanced when the sum of the thicknesses of the bottom first and middle second ferromagnetic layers is not so different from the thickness of the top third ferromagnetic layer. This phenomenon is consistent with a similar phenomenon which occurs in double uncoupled layers since the best thickness combination of the double uncoupled layers is when both layers are of the same thickness.

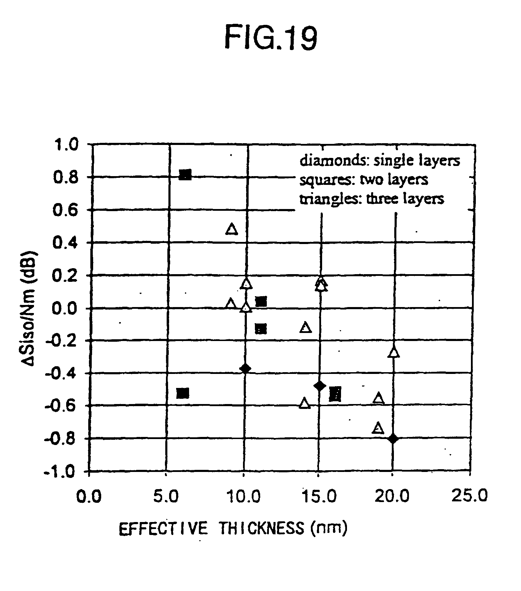

FIG. 19 is a diagram showing the effective thickness dependence of the change in isolated wave medium SNR. In FIG. 19, the ordinate indicates the change ΔSiso/Nm (dB) of the isolated wave medium SNR Siso/Nm, and the abscissa indicates the effective thickness (nm) of the ferromagnetic layers. In FIG. 19, the same symbols ◆, ■ and Δ are used to indicate the data of the three different magnetic recording media as in FIG. 18. It may be seen from FIG. 19 that good isolated wave medium SNR Siso/Nm is especially observed for the magnetic recording medium having the two exchange-coupled ferromagnetic layers with low Mr δ. Although the total thickness of the ferromagnetic layers in this case becomes greater than that of the magnetic recording medium having the single ferromagnetic layer, the read-write performance is hardly degraded, and in some cases even improved.

The present inventors have also found that, when at least one of the ferromagnetic layers of the magnetic layer structure is made up of a plurality of ferromagnetic layer which are in contact with each other and ferromagnetically coupled, a good performance is obtained especially when the lower ferromagnetic layers is Cr-rich such that the Cr content is 23 at% or greater, and the Cr content of the upper ferromagnetic layer is less. This indicates the crucial role of the lower ferromagnetic layer. According to the experiments conducted by the present inventors, it was found that the noise arising from imperfections in the lower ferromagnetic layer is effectively reduced due to cancellation from the succeeding ferromagnetic layers. In other words, it may be regarded that the lower layers form a large source of noise, but this embodiment can improve the SNR because the signals from the lower layers are cancelled such that most of the signals and thus also noise come from the upper layers.

Another example of a magnetic recording medium (not embodying the present invention) based on the above findings will now be described.

In this example, the magnetic recording medium comprises a substrate, an underlayer disposed above the substrate, and a magnetic layer structure including at least a bottom ferromagnetic layer provided on the underlayer and having a remanent magnetization and thickness product Mrᵢδᵢ, and a top ferromagnetic layer disposed above the bottom ferromagnetic layer and having a remanent magnetization and thickness product Mrⱼδⱼ, wherein a relationship Mr δ ≒ Σ (Mrᵢδᵢ-Mrⱼδⱼ) is satisfied, where Mr δ denotes a total remanent magnetization and thickness product of the magnetic layer structure, so that magnetization directions of adjacent ferromagnetic layers in the magnetic layer structure are closely antiparallel. δ,δᵢ, and δⱼ may be regarded as effective thicknesses.

The magnetic recording medium may further comprise a non-magnetic coupling layer interposed between two adjacent ferromagnetic layers of the magnetic layer structure, so that antiparallel magnetic interaction is induced thereby. This non-magnetic coupling layer may be made essentially of Ru with a thickness of approximately 0.4 to 1.0 nm. This non-magnetic coupling layer may be made of a material selected from a group of Ru, Rh, Ir, Cu, Cr and alloys thereof.

In the magnetic recording medium, each of the ferromagnetic layers of the magnetic layer structure may be made of a material selected from a group of Co, Fe, Ni, CoCrTa, CoCrPt and CoCrPt-M, where M=B, Cu, Mo, Nb, Ta, W and alloys thereof. In addition, at least one of the ferromagnetic layers of the magnetic layer structure may made up of a plurality of ferromagnetic layers which are in contact with each other and ferromagnetically coupled. The Mrⱼδⱼ of the top ferromagnetic layer may be largest among products of remanent magnetization and thickness of other ferromagnetic layers of the magnetic layer structure. Furthermore, the ferromagnetic layers of the magnetic layer structure may have mutually different compositions.

According to this magnetic recording medium, the thermal stability and the isolated wave medium SNR Siso/Nm respectively are larger than those obtained by a magnetic recording medium with similar Mr δ but having single or multiple magnetic layers of closely parallel magnetizations. Further, the PW50 value is smaller than that obtained by a magnetic recording medium having a similar total magnetic layer thickness.

In addition, the dHc/dT value obtained in this magnetic recording medium is smaller than that of the magnetic recording medium with similar Mδ but having single or multiple magnetic layers of closely parallel magnetizations.

Furthermore, it was confirmed from data such as those shown in FIGS. 16 and 17 that the ferromagnetic coupling obtained in this magnetic recording medium is sufficiently strong and closely antiparallel in a temperature range of approximately -10°C to 150°C.

Of course, magnetic storage apparatus described above may also use one or more magnetic recording media according to the magnetic recording medium described above.

Next, a description will be given of a recording method. This method uses any one of the magnetic recording media described above, to magnetically record information on the magnetic recording medium in the magnetic storage apparatus described above.

More particularly, the method of magnetically recording information on the magnetic recording medium comprises a step of switching magnetization direction of at least one of the ferromagnetic layers which form the magnetic layer structure of the magnetic recording medium and have antiparallel magnetization directions, as in the third example of the magnetic recording medium. According to this method, it is possible to make a high-density recording with improved thermal stability.

Next, a description will be given of a method of producing a magnetic recording medium.

When producing any one of the magnetic recording medium described above, the crystal properties and crystal orientation of the layers forming the magnetic recording medium must be appropriately controlled. The non-magnetic coupling layer in particular is extremely thin compared to the other layers such as the underlayer, and it is desirable that such a thin non-magnetic coupling layer is uniformly grown. Furthermore, in order to achieve the proper ferromagnetic coupling, the interfaces between two adjacent layers must be extremely clean and include no notable abnormalities.

Accordingly, in this medium producing method, the layers of the magnetic recording medium are formed sequentially (or continuously), preferably by sequential (or continuous) sputtering, since the sputtering enables an extremely thin and uniform layer to be grown as compared to other layer formation techniques. In addition, it is possible to minimize contamination between the adjacent layers by employing the sequential (or continuous) sputtering.

Furthermore, even in the case of the sputtering, it is difficult to guarantee uniform growth of a thin film having a thickness on the order of approximately 1 nm or less. Based on experiments conducted by the present inventors, the sputtering rate is preferably set to 0.35 nm/s or less in order to guarantee the uniformity of the grown thin film.

Moreover, when the gas pressure during the sputtering is too high, the layers and the interface between the adjacent layers are easily contaminated. On the other hand, when the gas pressure during the sputtering is too low, unstable plasma causes non-uniform growth of the thin film. According to experiments conducted by the present inventors, the gas pressure during the sputtering is preferably set on the order of approximately 5 mTorr.

In addition, the substrate temperature during the sputtering also needs to be optimized. A substrate temperature which is too high may cause the substrate to warp, thereby causing non-uniform growth of particularly the thin non-magnetic coupling layer. On the other hand, a substrate temperature which is too low may cause layers having unsatisfactory crystal properties to be grown. According to experiments conducted by the present inventors, the substrate temperature prior to the sputtering is set in a range of approximately 100°C to 300°C.

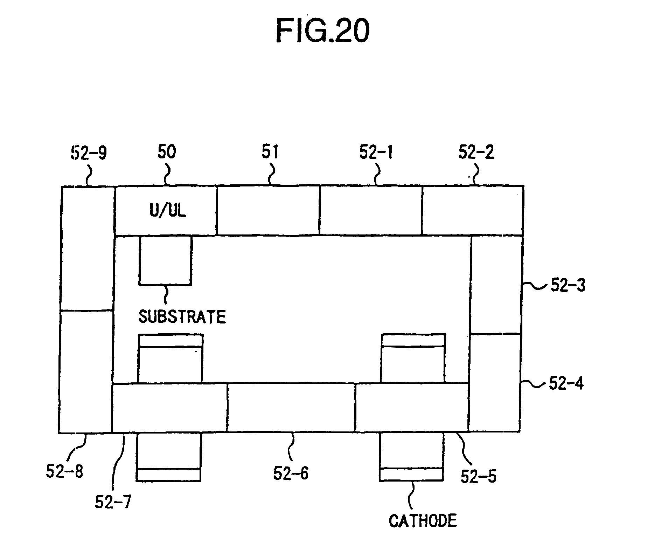

FIG. 20 is a diagram showing the general construction of a magnetic recording medium producing apparatus which is used in this medium producing method. The apparatus shown in FIG. 20 generally includes a loading and unloading unit 50, a heating chamber 51, and a plurality of sputtering chambers 52-1 through 52-n, where n depends on the layer structure of the magnetic recording medium which is produced. The last sputtering chamber 52-n connects to the loading and unloading unit 50 so as to enable unloading of the produced magnetic recording medium. For the sake of convenience, it is assumed that n=9.

First, a substrate is loaded into the loading and unloading unit 50 and heated to a substrate temperature in a range of approximately 100°C to 300°C within the heating chamber 51. Then, sequential (or continuous) DC sputtering is successively carried out in the sputtering chambers 52-1 through 52-9 to form on the substrate a NiAl layer which is 40 nm thick, a CrMo underlayer which is 20 nm thick, a CoCr intermediate layer which is 1.5 nm thick, a CoCrPtB ferromagnetic layer which is 4 nm thick, a Ru non-magnetic coupling layer which is 0.8 nm thick, a CoCrPtB ferromagnetic layer which is 4 nm thick, a Ru non-magnetic coupling layer which is 0.8 nm thick, a CoCrPtB magnetic layer, and a C protection layer.

The Ar gas pressure in the sputtering chambers 52-1 through 52-9 are set to approximately 5 mTorr. In addition, the sputtering rate is set approximately 0.35 nm/s or less and slower in the sputtering chambers 52-5 and 52-7 than in the other sputtering chambers. The slower sputtering rate can be achieved by increasing the distance between the target and the substrate by increasing the separation of the cathodes, as shown for the sputtering chamber 52-5 and 52-7.

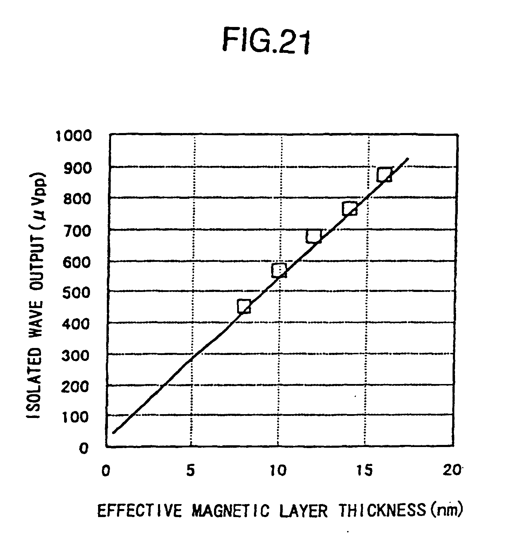

FIG. 21 is a diagram showing the dependence of isolated wave output on effective magnetic layer thickness. In FIG. 21, the ordinate indicates the isolated wave output (µVpp), and the abscissa indicates the effective magnetic layer thickness (nm). The data shown in FIG. 21 was obtained by writing signals on the produced magnetic recording medium and reading the written signal using a GMR head. It was confirmed that the isolated wave output is proportional to the effective magnetic layer thickness, verifying the antiparallel ferromagnetic coupling of the magnetic layer structure.

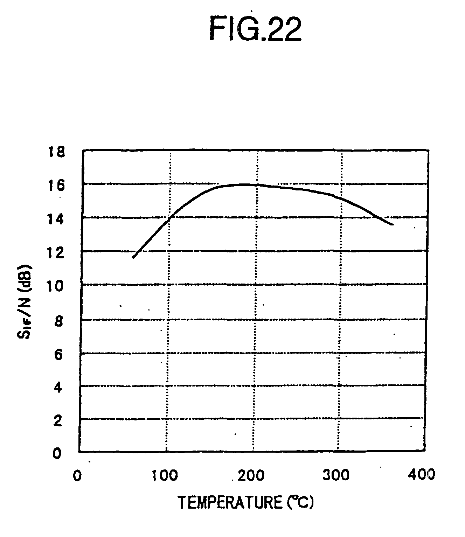

FIG. 22 is a diagram showing the temperature dependence of high-frequency SNR. In FIG. 22, the ordinate indicates the high-frequency SNR (dB), and the abscissa indicates the substrate temperature (°C) during the sputtering. It was confirmed that good properties of the grown layers are obtained, preferably when the substrate temperature is set in a range of approximately 100°C to 300°C.

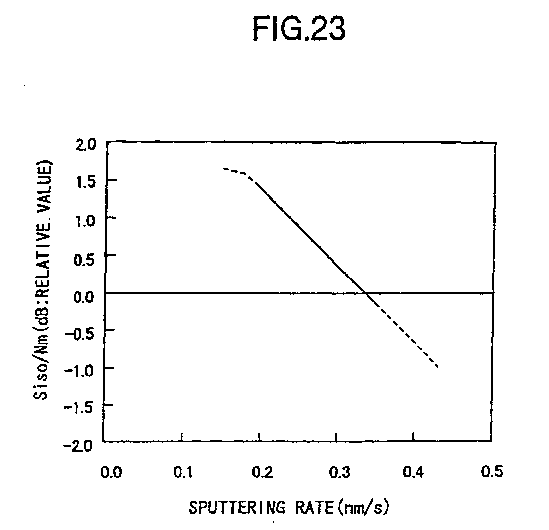

FIG. 23 is a diagram showing a relationship of the isolated wave medium SNR Siso/Nm and the sputtering rate of Ru. In FIG. 23, the ordinate indicates the isolated wave medium SNR Siso/Nm (dB, relative value), and the abscissa indicates the sputtering rate (nm/s). The data shown in FIG. 23 were obtained to confirm whether or not the ferromagnetic layer and the magnetic layer respectively provided under and above the Ru layer would form a norm magnetic coupling. For the sake of convenience, the data shown in FIG. 23 were obtained for a case where the Ru layer is formed to a thickness of 1.4 nm on the CCPB ferromagnetic layer, and the CCPB magnetic layer is formed on the Ru layer.

In FIG. 23, the isolated wave medium SNR Siso/Nm is indicated by a relative value with respect to a comparison model medium having no Ru layer. It may be seen from FIG. 23 that the isolated wave medium SNR Siso/Nm deteriorates as the sputtering rate of Ru increases. This indicates that the extremely thin Ru layer is not formed uniformly at high sputtering rates. FIG. 23 indicates that the isolated wave medium SNR Siso/Nm becomes poorer than that of the comparison model medium having no Ru layer, particularly when the sputtering rate of Ru becomes greater than 0.35 nm/s. Therefore, it was confirmed that the sputtering rate of Ru should be set to 0.35 nm/s or less in order to produce a magnetic recording medium having the high performance described above.

Next, a description will be given of an embodiment of a magnetic recording medium according to the present invention. In this embodiment, a magnetic bonding layer is further provided at least between the ferromagnetic layer and the non-magnetic coupling layer or, between the magnetic layer and the non-magnetic coupling layer of the medium of Figs. 1 or 2 described above. In this embodiment, the magnetic bonding layer is additionally provided to increase the exchange coupling effect, so as to further improve the thermal stability.

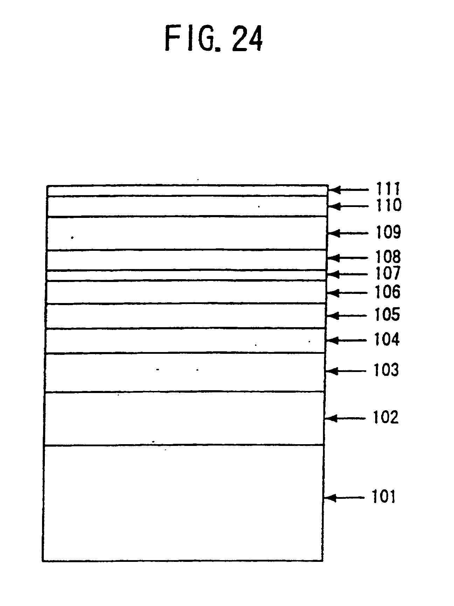

FIG. 24 is a cross sectional view showing an important part of an embodiment of the magnetic recording medium according to the present invention.

The magnetic recording medium includes a non-magnetic substrate 101, a seed layer 102, an underlayer 103, a non-magnetic intermediate layer 104, a ferromagnetic layer 105, a lower magnetic bonding layer 106, a non-magnetic coupling layer 107, an upper magnetic bonding layer 108, a magnetic layer 109, a protection layer 110, and a lubricant layer 111 which are stacked in this order as shown in FIG. 24.

Although two magnetic bonding layers are provided in this embodiment, it is possible to provide only one of the upper and lower magnetic bonding layers 108 and 106. When both the upper and lower magnetic bonding layers 108 and 106 are provided, the exchange coupling effects of the upper and lower magnetic bonding layers 108 and 106 are set so as to be greater than the exchange coupling effects of the magnetic layer 109 and the ferromagnetic layer 105. By setting the exchange coupling effects of the upper and lower magnetic bonding layers 108 and 106 in this manner, the exchange coupling strength is increased above and below the non-magnetic coupling layer 107, so that the thermal stability of the magnetic recording medium is improved.

If only one magnetic bonding layer is provided, the exchange coupling strength is increased between the lower magnetic bonding layer 106 and the magnetic layer 109 or, between the upper magnetic bonding layer 108 and the ferromagnetic layer 105, thereby improving the thermal stability of the magnetic recording medium.

For example, the non-magnetic substrate 101 is made of Al, Al alloy or glass. The non-magnetic substrate 101 may or may not be mechanically textured.

The seed layer 102 is made of NiP, for example, especially in the case where the non-magnetic substrate 101 is made of Al or Al alloy. The NiP seed layer 102 may or may not be oxidized and may or may not be mechanically textured. Especially in the case where the non-magnetic substrate 101 is made of glass, the seed layer 102 is made of an alloy having the B2 structure and selected from a group of materials including NiAl and FeAl, for example. The seed layer 102 is provided to promote a (001) or a (112) texture of the underlayer 103.

In a case where the magnetic recording medium is a magnetic disk, the mechanical texturing provided on the non-magnetic substrate 101 or the NiP seed layer 102 is made in a circumferential direction of the disk, that is, in a direction in which tracks of the disk extend.

The non-magnetic intermediate layer 104 is provided to further promote epitaxy, narrow the grain distribution width of the magnetic layer 109, and orient the anisotropy axes of the magnetic layer 109 along a plane parallel to the recording surface of the magnetic recording medium. This non-magnetic intermediate layer 104 is made of a hcp structure alloy such as CoCr-M, where M = B, Mo, Nb, Ta, W, Cu or alloys thereof, and has a thickness in a range of 1 to 5 nm.

The ferromagnetic layer 105 is made of Co, Ni, Fe, Co-based alloys, Ni-based alloys, Fe-based alloys or the like. In other words, Co-based alloys such as CoCrTa, CoCrPt and CoCrPt-M, where M = B, Mo, Nb, Ta, W, Cu or alloys thereof may be used for the ferromagnetic layer 105. For example, the ferromagnetic layer 105 has a thickness in a range of approximately 2 to 10 nm.

The lower magnetic bonding layer 106 is made of Co, Fe, Ni-based alloys, Co-based alloys, Fe-based alloys or the like. In other words, Co-based alloys such as CoCrTa, CoCrPt and CoCrPt-M may be used for the lower magnetic bonding layer 106, where M = B, Mo, Nb, Ta, W, Cu or alloys thereof. The Co concentration or Fe concentration of the lower magnetic bonding layer 106 is desirably higher than the Co concentration or Fe concentration of the ferromagnetic layer 105. The lower magnetic bonding layer 106 has a thickness in a range of approximately 1 to 5 nm.

In a case where Co or Fe is used for the ferromagnetic layer 105, it is possible to omit the lower magnetic bonding layer 106. On the other hand, when providing the lower magnetic bonding layer 106, Fe or Co is used in reverse to the ferromagnetic layer 105.

In other words, the Co or Fe concentration of the lower magnetic bonding layer 106 (and the upper magnetic bonding layer 108 which will be described later) is preferably higher than the Co or Fe concentrations of the ferromagnetic layer 105 and the magnetic layer 109. If Co or Fe is used for the ferromagnetic layer 105 or the magnetic layer 109, the lower magnetic bonding layer 106 may be omitted. When providing the magnetic bonding layer 106, the material used for the magnetic bonding layer 106 is preferably in reverse to that used for the ferromagnetic layer 105 or the magnetic layer 109, that is, Fe or Co is used for the magnetic bonding layer 106.

The non-magnetic coupling layer 107 is made of Ru, Rh, Ir, Cr, Cu, Ru-based alloys, Rh-based alloys, Ir-based alloys, Cr-based alloys, Cu-based alloys or the like.

When Ru, Rh, Ir, Cu, Ru-based alloys, Rh-based alloys, Ir-based alloys or Cu-based alloys are used for the non-magnetic coupling layer 107, Co, Co-based alloys or NiFe is desirably used for the magnetic bonding layer 106. In addition, the magnetic bonding layer 106 is desirably made of Fe or Fe-based alloys when the non-magnetic coupling layer 107 is made of Cr or Cr-based alloys.

For example, when the non-magnetic coupling layer 107 is made of Ru, the thickness of the non-magnetic coupling layer 107 is set in a range of approximately 0.4 to 1.0 nm, and preferably to approximately 0.8 nm. By setting the thickness of the non-magnetic coupling layer 107 to such a range, the magnetizations of the ferromagnetic layer 105 and the magnetic layer 109 become antiparallel.

In other words, the magnetization directions of the ferromagnetic layer 105 and the magnetic layer 109 may be mutually antiparallel or mutually parallel.

In the case of the mutually antiparallel magnetization directions, the non-magnetic coupling layer 107 desirably has a thickness in a range of approximately 0.4 to 1.0 nm when made of a material selected from a group of Ru, Rh, Ir, Cr, Ru-based alloys, Rh-based alloys, Ir-based alloys and Cr-based alloys, and has a thickness in a range of approximately 1.5 to 2.1 nm when made of a material selected from a group of Cu and Cu-based alloys.

On the other hand, in the case of mutually parallel magnetization directions, the non-magnetic coupling layer 107 desirably has a thickness in a range of approximately 0.2 to 0.4 nm and 1.0 to 1.7 nm when made of a material selected from a group of Ru, Rh, Ir, Cu, Ru-based alloys, Rh-based alloys, Ir-based alloys and Cu-based alloys, and has a thickness in a range of approximately 1.0 to 1.4 nm and 2.6 to 3.0 nm when made of a material selected from a group of Cr and Cr-based alloys.

The upper magnetic bonding layer 108 is made of a material similar to that of the lower magnetic bonding layer 106. In addition, the Co concentration or Fe concentration of the upper magnetic bonding layer 108 is preferably higher than the Co concentration or Fe concentration of the magnetic layer 109. The upper magnetic bonding layer 108 has a thickness in a range of approximately 1 to 5 nm. In a case where Co or Fe is used for the magnetic layer 109, it is possible to omit the upper magnetic bonding layer 108. On the other hand, when providing the upper magnetic bonding layer 108, Fe or Co is used in reverse to the magnetic layer 109.

The upper and lower magnetic bonding layers 108 and 106 may be made of a material different from those of the ferromagnetic layer 105 and the magnetic layer 109. In this case, a different material may have the same material composition but with a different material content ratio.

The exchange coupling between the upper and lower magnetic bonding layers 108 and 106 is desirably larger than the exchange coupling between the magnetic layer 109 and the ferromagnetic layer 105.

When using Ru, Rh, Ir, Cu, Ru-based alloys, Rh-based alloys, Ir-based alloys or Cu-based alloys for the non-magnetic coupling layer 107, it is desirable to use Co, Co-based alloys or NiFe for the upper and lower magnetic bonding layers 108 and 106. On the other hand, when using Cr or Cr-based alloys for the non-magnetic coupling layer 107, it is desirable to use Fe or Fe-based alloys for the upper and lower magnetic bonding layers 108 and 106.

The ferromagnetic layer 105 and the non-magnetic coupling layer 107 form the basic exchange layer structure. The upper and lower magnetic bonding layers 108 and 106 which are provided above and below the non-magnetic coupling layer 107 have the function of increasing the exchange coupling effects of the exchange layer structure.

The magnetic layer 109 is made of a material selected from a group of Co, Ni, Fe, Ni-based alloys., Fe-based alloys and Co-based alloys such as CoCrTa, CoCrPt and CoCrPt-M, where M = B, Mo, Nb, Ta, W, Cu or alloys thereof. The magnetic layer 109 has a thickness in a range of 5 to 30 nm. Of course, the magnetic layer 109 is not limited to a single-layer structure, and a multi-layer structure may be used for the magnetic layer 109.

The protection layer 110 and the lubricant layer 111 are similar to those of the first and second embodiments described above. Obviously, the layer structure under the exchange layer structure is not limited to that shown in FIG. 24. For example, the underlayer 103 may be made of Cr or Cr-based alloys and formed to a thickness in a range of 5 to 40 nm on the substrate 101, and the exchange layer structure may be provided on this underlayer 103.

In this embodiment, the magnetic recording medium may further comprise a substrate and an underlayer provided above the substrate, such that the exchange layer structure is provided above the underlayer. Furthermore, the magnetic recording medium may further comprise a non-magnetic intermediate layer provided between the underlayer and the exchange layer structure, where the non-magnetic intermediate layer is made of a CoCr-M alloy having a hcp structure and a thickness of approximately 1 to 5 nm, where M = B, Mo, Nb, Ta, W, Cu or alloys thereof. Moreover, the magnetic recording medium may further comprise a seed layer provided between the substrate and the underlayer. The seed layer may be made of NiP which may or may not be mechanically textured, and may or may not be oxidized. In addition, the seed layer may be made of an alloy having a B2 structure such as NiAl and FeAl.

The magnetic recording medium may further comprise at least a first exchange layer structure and a second exchange layer structure provided between the first exchange layer structure and the magnetic layer, where the second exchange layer structure has a ferromagnetic layer with a magnetic anisotropy smaller than that of a ferromagnetic layer of the first exchange layer structure, and the first and second exchange layer structures have ferromagnetic layers with magnetization directions which are mutually antiparallel.

The magnetic recording medium may further comprise at least a first exchange layer structure and a second exchange layer structure provided between the first exchange layer structure and the magnetic layer, where the second exchange layer structure has a ferromagnetic layer with a remanent magnetization and thickness product smaller than that of a ferromagnetic layer of the first exchange layer structure, and the first and second exchange layer structures have ferromagnetic layers with magnetization directions which are mutually antiparallel.

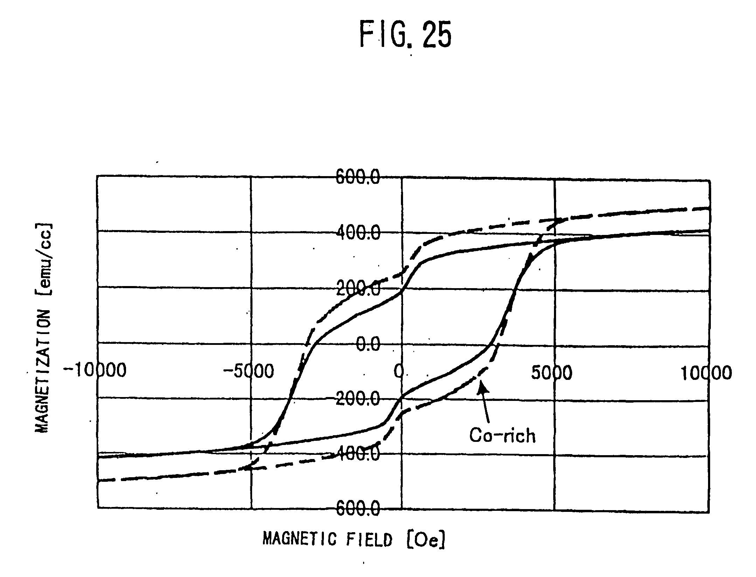

FIG. 25 is a diagram showing the in-plane characteristic of two CoCr-based alloy layers separated by Ru, for a case where a seed layer, an underlayer, a non-magnetic intermediate layer, a ferromagnetic layer, a Ru non-magnetic coupling layer, a CoCr-based alloy magnetic layer are successively stacked in this order on a glass substrate.

It is assumed that the same CoCr-based alloy is used for the ferromagnetic layer and the magnetic layer. In FIG. 25, two loops are shown for different concentrations of Co and Cr, but the layer structure and compositions other than Co and Cr are the same for the two loops. In FIG. 25, the ordinate indicates the magnetization (emu/cc), and the abscissa indicates the magnetic field (Oe).

As may be seen from FIG. 25, a shift occurs in both the two loops in the vicinity of the ordinate, verifying the generation of the anti-ferromagnetic coupling. Furthermore, it may be seen from FIG. 25 that the loop indicated by the dashed line for the higher concentration of Co (Co-rich) has the larger coercivity. Even in the case of the conventional magnetic recording medium having no exchange layer structure, the coercivity is improved by approximately 400 Oe for the magnetic layer with the high Co concentration as compared to the magnetic layer with the low Co concentration. Since the loop shift occurs when a sum of the externally applied magnetic field and the magnetic field caused by the anti-ferromagnetic coupling introduced between the magnetic layer and the ferromagnetic layer becomes equal to the coercivity, a difference between the loop shift position and the coercivity becomes the strength of the anti-ferromagnetic exchange coupling. In FIG. 25, the loop shifts occur approximately at the same magnetic field position, but it may be seen that the exchange coupling is larger for the Co-rich case indicated by the dashed line due to a difference in coercivities between the two cases. In addition, the aspect ratio of the Co-rich loop is better than the other loop.

Therefore, by using a Co-rich alloy for the magnetic bonding layer, it is possible to increase the exchange coupling effect and realize a magnetic recording medium having a further improved thermal stability.

## Claims (Claims for the following Contracting State(s): GB)

1. A magnetic recording medium comprising:
at least one exchange layer structure (105, 107) and a magnetic layer (109) provided on the exchange layer structure (105, 107), said exchange layer structure (105, 107) including a ferromagnetic layer (105) and a non-magnetic coupling layer (107) provided on the ferromagnetic layer (105); and
a magnetic bonding layer (106, 108) provided between the ferromagnetic layer (105) and the non-magnetic coupling layer (107) and/or between the non-magnetic coupling layer (107) and the magnetic layer (109),
said magnetic bonding layer (106, 108) having a magnetization direction parallel to the ferromagnetic layer (105) and the magnetic layer (109);
said ferromagnetic layer (105) and said magnetic layer (109) being exchange-coupled and having anti-parallel magnetizations;
**characterised in that** said magnetic bonding layer (106, 108) is made of a material selected from a group consisting of Fe-based alloys, Ni-based alloys, and Co-based alloys including CoCrTa, CoCrPt and CoCrPt-M, where M = B, Mo, Nb, Ta, W, Cu or alloys thereof.

2. The magnetic recording medium as claimed in claim 1, wherein said magnetic bonding layer (106, 108) is made of a material different from those of the ferromagnetic layer (105) and the magnetic layer (109).

3. The magnetic recording medium as claimed in claim 1 or 2, wherein an upper magnetic bonding layer (108) and a lower magnetic bonding layer (106) are respectively provided above and below the non-magnetic coupling layer (107), and an exchange coupling between the upper magnetic bonding layer (108) and the lower magnetic bonding layer (106) is larger than an exchange coupling between the magnetic layer (109) and the ferromagnetic layer (105).

4. The magnetic recording medium as claimed in any of claims 1 to 3, wherein a Co or Fe concentration of the magnetic bonding layer (106, 108) is higher than Co or Fe concentrations of the ferromagnetic layer (105) and the magnetic layer (109).

## Claims (Claims for the following Contracting State(s): FR, DE)

1. A magnetic recording medium comprising:
at least one exchange layer structure (105, 107) and a magnetic layer (109) provided on the exchange layer structure (105, 107), said exchange layer structure (105, 107) including a ferromagnetic layer (105) and a non-magnetic coupling layer (107) provided on the ferromagnetic layer (105); and
a magnetic bonding layer (106, 108) provided between the ferromagnetic layer (105) and the non-magnetic coupling layer (107) and/or between the non-magnetic coupling layer (107) and the magnetic layer (109),
said magnetic bonding layer (106, 108) having a magnetization direction parallel to the ferromagnetic layer (105) and the magnetic layer (109);
**characterised in that** said ferromagnetic layer (105) and said magnetic layer (109) are exchange-coupled and have anti-parallel magnetizations.

2. The magnetic recording medium as claimed in claim 1, wherein said magnetic bonding layer (106, 108) is made of a material different from those of the ferromagnetic layer (105) and the magnetic layer (109).

3. The magnetic recording medium as claimed in claim 1 or 2, wherein an upper magnetic bonding layer (108) and a lower magnetic bonding layer (106) are respectively provided above and below the non-magnetic coupling layer (107), and an exchange coupling between the upper magnetic bonding layer (108) and the lower magnetic bonding layer (106) is larger than an exchange coupling between the magnetic layer (109) and the ferromagnetic layer (105).

4. The magnetic recording medium as claimed in any of claims 1 to 3, wherein said magnetic bonding layer (106, 108) is made of a material selected from a group consisting of Co, Fe, Fe-based alloys, Ni-based alloys, and Co-based alloys including CoCrTa, CoCrPt and CoCrPt-M, where M = B, Mo, Nb, Ta, W, Cu or alloys thereof.

5. The magnetic recording medium as claimed in claim 4, wherein a Co or Fe concentration of the magnetic bonding layer (106, 108) is higher than Co or Fe concentrations of the ferromagnetic layer (105) and the magnetic layer (109).

## Patentansprüche (Patentansprüche für folgende(n) Vertragsstaat(en): GB)

1. Magnetisches Aufzeichnungsmedium, **gekennzeichnet durch**:
wenigstens eine Austauschschichtstruktur (105, 107) und eine magnetische Schicht (109), die auf der Austauschschichtstruktur (105, 107) vorgesehen ist, wobei die Austauschschichtstruktur (105, 107) eine ferromagnetische Schicht (105) und eine nichtmagnetische Kopplungsschicht (107) umfaßt, die auf der ferromagnetischen Schicht vorgesehen ist; und
eine magnetische Verbindungsschicht (106, 108), die zwischen der ferromagnetischen Schicht (105) und der nichtmagnetischen Kopplungsschicht (107) und/oder zwischen der nichtmagnetischen Kopplungsschicht (107) und der magnetischen Schicht vorgesehen (109) ist,
welche magnetische Verbindungsschicht (106, 108) eine Magnetisierungsrichtung parallel zu der ferromagnetischen Schicht (105) und der magnetischen Schicht (109) hat; die ferromagnetische Schicht (105) und die magnetische Schicht (109) austauschgekoppelt sind und antiparallele Magnetisierungen haben.
**dadurch** gekennzeichnet, daß die magnetische Verbindungsschicht (106, 108) hergestellt ist aus einem Material ausgewählt aus der Gruppe bestehend aus Legierungen auf Fe-Basis, Legierungen aug Ni-Basis and Legierungen auf Co-Basis einschließlich CoCrTa, CoCrPt und CoCrPt-M, wobie M = B, Mo, Nb, Ta, W, Cu oder Legierungen davon sind.

2. Magnetisches Aufzeichnungsmedium nach Anspruch 1, bei dem die magnetische Verbindungsschicht (106, 108) aus einem Material gemacht ist, das verschieden ist von jenen der ferromagnetischen schicht (105) und der magnetischen Schicht (109).

3. Magnetisches Aufzeichnungsmedium nach Anspruch 1 oder 2, bei dem eine obere magnetische Verbindungsschicht (108) bzw. eine untere magnetische Verbindungsschicht (106) jeweils oberhalb und unterhalb der nichmagnetischen Kopplungsschicht (107) vorgesehen sind, und eine Austauschkopplung zwischen der oberen magnetischen Verbindungsschicht (108) und der unteren magnetischen Verbindungsschicht (106) größer als die Austauschkopplung zwischen der magnetischen Schicht (109) und der ferromagnetischen Schicht (105) ist.

4. Magnetisches Aufzeichnungsmedium nach einem der Ansprüche 1 bis 3, bei dem die Co- oder Fe-Konzentration der magnetischen Verbindungsschicht (106, 109) höher als die Cooder Fe-Konzentrationen der ferromagnetischen Schicht (105) und der magnetischen Schicht (109) sind.

## Patentansprüche (Patentansprüche für folgende(n) Vertragsstaat(en): FR, DE)

1. Magnetisches Aufzeichnungsmedium, **gekennzeichnet durch**:
wenigstens eine Austauschschichtstruktur (105, 107) und eine magnetische Schicht (109), die auf der Austauschschichtstruktur (105, 107) vorgesehen ist, wobei die Austauschschichtstruktur (105, 107) eine ferromagnetische Schicht (105) und eine nichtmagnetische Kopplungsschicht (107) umfaßt, die auf der ferromagnetischen Schicht vorgesehen ist; und
eine magnetische Verbindungsschicht (106, 108), die zwischen der ferromagnetischen Schicht (105) und der nichtmagnetischen Kopplungsschicht (107) und/oder zwischen der nichtmagnetischen Kopplungsschicht (107) und der magnetischen Schicht vorgesehen (109) ist,
welche magnetische Verbindungsschicht (106, 108) eine Magnetisierungsrichtung parallel zu der ferromagnetischen Schicht (105) und der magnetischen Schicht (109) hat;
**dadurch** gekennzeichnet, daß die ferromagnetische Schicht (105) und die magnetische Schicht (109) austauschgekoppelt sind und antiparallele Magnetisierungen haben.

2. Magnetisches Aufzeichnungsmedium nach Anspruch 1, bei dem die magnetische Verbindungsschicht (106, 108) aus einem Material gemacht ist, das verschieden ist von jenen der ferromagnetischen Schicht (105) und der magnetischen Schicht (109).

3. Magnetisches Aufzeichnungsmedium nach Anspruch 1 oder 2, bei dem eine obere magnetische Verbindungsschicht (108) bzw. eine untere magnetische Verbindungsschicht (106) jeweils oberhalb und unterhalb der nichmagnetischen Kopplungsschicht (107) vorgesehen sind, und eine Austauschkopplung zwischen der oberen magnetischen Verbindungsschicht (108) und der unteren magnetischen Verbindungsschicht (106) größer als die Austauschkopplung zwischen der magnetischen Schicht (109) und der ferromagnetischen Schicht (105) ist.

4. Magnetisches Aufzeichnungsmedium nach einem der Ansprüche 1 bis 3, bei dem die magnetische Verbindungsschicht (106, 108) hergestellt ist aus einem Material ausgewählt aus der Gruppe bestehend aus Co, Fe, Legierungen auf Fe-Basis, Legierungen auf Ni-Basis und Legierungen auf Co-Basis einschließlich CoCrTa, CoCrPt und CoCrPt-M, wobei M = B, Mo, Nb, Ta, W, Cu oder Legierungen davon sind.

5. Magnetisches Aufzeichnungsmedium nach Anspruch 4, bei dem die Co- oder Fe-Konzentration der magnetischen Verbindungsschicht (106, 108) höher als die Co- oder Fe-Konzentrationen der ferromagnetischen Schicht (105) und der meagnetischen Schicht (109) sind.

## Revendications (Revendications pour l'(les) Etat(s) contractant(s) suivant(s): GB)

1. Moyen d'enregistrement magnétique comprenant :
au moins une structure de couche d'échange (105, 107) et une couche magnétique (109) prévue sur la structure de couche d'échange (105, 107), ladite structure de couche d'échange (105, 107) comprenant une couche ferromagnétique (105) et une couche de couplage non magnétique (107) prévue sur la couche ferromagnétique (105) ; et
une couche de liaison magnétique (106, 108) prévue entre la couche ferromagnétique (105) et la couche de couplage non magnétique (107) et/ou entre la couche de couplage non magnétique (107) et la couche magnétique (109),
ladite couche de liaison magnétique (106, 108) ayant une direction de magnétisation parallèle à la couche ferromagnétique (105) et à la couche magnétique (109) ;
ladite couche ferromagnétique (105) et ladite couche magnétique (109) sont couplées en échange et ont des magnétisations antiparallèles.
**caractérisé en ce que** ladite couche de liaison magnétique (106, 108) est réalisée en un matériau sélectionné à partir d'un groupe comprenant alliages à base de Fe, alliages à base de Ni et alliages à base de Co comprenant CoCrTa, CoCrPt et CoCrPt-M, où M = B, Mo, Nb, Ta, W, Cu ou des alliages de ceux-ci.

2. Moyen d'enregistrement magnétique selon la revendication 1, dans lequel ladite couche de liaison magnétique (106, 108) est réalisée en un matériau différent de ceux de la couche ferromagnétique (105) et de la couche magnétique (109).

3. Moyen d'enregistrement magnétique selon la revendication 1 ou 2, dans lequel une couche de liaison magnétique supérieure (108) et une couche de liaison magnétique inférieure (106) sont prévues respectivement au-dessus et au-dessous de la couche de couplage non magnétique (107) et un couplage d'échange entre la couche de liaison magnétique supérieure (108) et la couche de liaison magnétique inférieure (106) est plus grand qu'un couplage d'échange entre la couche magnétique (109) et la couche ferromagnétique (105).

4. Moyen d'enregistrement magnétique selon l'une quelconque des revendications 1 à 3, dans lequel une concentration de Co ou Fe de la couche de liaison magnétique (106, 108) est supérieure aux concentrations de Co ou Fe de la couche ferromagnétique (105) et de la couche magnétique (109).

## Revendications (Revendications pour l'(les) Etat(s) contractant(s) suivant(s): FR, DE)

1. Moyen d'enregistrement magnétique comprenant :
au moins une structure de couche d'échange (105, 107) et une couche magnétique (109) prévue sur la structure de couche d'échange (105, 107), ladite structure de couche d'échange (105, 107) comprenant une couche ferromagnétique (105) et une couche de couplage non magnétique (107) prévue sur la couche ferromagnétique (105) ; et
une couche de liaison magnétique (106, 108) prévue entre la couche ferromagnétique (105) et la couche de couplage non magnétique (107) et/ou entre la couche de couplage non magnétique (107) et la couche magnétique (109),
ladite couche de liaison magnétique (106, 108) ayant une direction de magnétisation parallèle à la couche ferromagnétique (105) et à la couche magnétique (109) ;
**caractérisé en ce que** ladite couche ferromagnétique (105) et ladite couche magnétique (109) sont couplées en échange et ont des magnétisations antiparallèles.

2. Moyen d'enregistrement magnétique selon la revendication 1, dans lequel ladite couche de liaison magnétique (106, 108) est réalisée en un matériau différent de ceux de la couche ferromagnétique (105) et de la couche magnétique (109).

3. Moyen d'enregistrement magnétique selon la revendication 1 ou 2, dans lequel une couche de liaison magnétique supérieure (108) et une couche de liaison magnétique inférieure (106) sont prévues respectivement au-dessus et au-dessous de la couche de couplage non magnétique (107) et un couplage d'échange entre la couche de liaison magnétique supérieure (108) et la couche de liaison magnétique inférieure (106) est plus grand qu'un couplage d'échange entre la couche magnétique (109) et la couche ferromagnétique (105).

4. Moyen d'enregistrement magnétique selon l'une quelconque des revendications 1 à 3, dans lequel ladite couche de liaison magnétique (106, 108) est réalisée en un matériau sélectionné à partir d'un groupe comprenant Co, Fe, alliages à base de Fe, alliages à base de Ni et alliages à base de Co comprenant CoCrTa, CoCrPt et CoCrPt-M, où M = B, Mo, Nb, Ta, W, Cu ou des alliages de ceux-ci.

5. Moyen d'enregistrement magnétique selon la revendication 4, dans lequel une concentration de Co ou Fe de la couche de liaison magnétique (106, 108) est supérieure aux concentrations de Co ou Fe de la couche ferromagnétique (105) et de la couche magnétique (109).
